# EUROPEAN PATENT APPLICATION

(11) **EP 1 239 428 A2**
(43) Date of publication of application: **11.09.2002**
(21) Application number: 01310960.8
(22) Date of filing: 31.12.2001
(51) Int. Cl.: G07F 13/10

(54) **Cup transfer device for vending machine**

(30) Priority: 19.02.2001 KR 2001008271; 08.03.2001 KR 2001011956; 10.07.2001 KR 2001041126
(71) Applicant: Samsung Kwangju Electronics Co., Ltd., Kwangju-city (KR)
(72) Inventor: Kim, Jung-gi, 103-105, Keumho Apartment, Kwangju-city (KR); Lee, Man-seob, 103-1503 Kunyoung Apartment, Kwangju-city (KR)
(74) Representative: Blatchford, William Michael

(57) **Abstract**

A cup transfer device for a vending machine is capable of controlling the stop position of a cup holder (110) accurately. A motor driven mechanism (120) moves the cup holder until it reaches the region of the predetermined stop position. In this region position adjusting means (140), which include a position adjusting recess (141a) formed in an outer circumference of a sensing disc (131) of the cup transfer device and a roller pressed against the outer circumference of the sensing disc by a spring (142), cause the cup holder to be moved exactly to the stop position. The adjusting means may, instead, adjust the position of the cup holder electromagnetically.

## Description

This invention relates to a vending machine, and more particularly to a cup transfer device for a vending machine for transferring a cup supplied from a cup supply device between a cup supply unit and a low material discharging hole at a product discharge station in the machine.

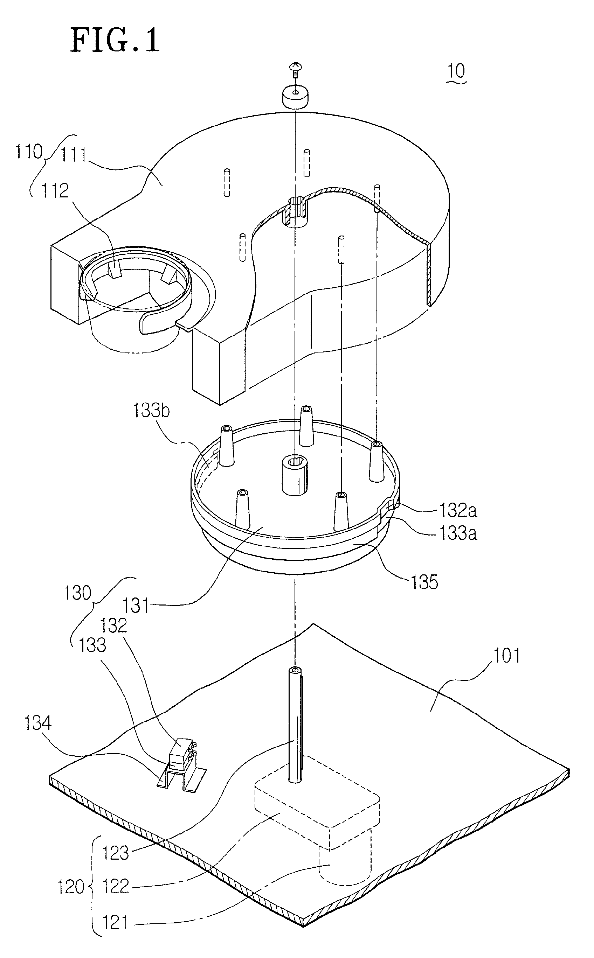

Referring to Figure 1, a vending machine cup transfer device 10 of the applicant, undisclosed at the priority date of this application, comprises a cup holder 110, driving means 120, and position control means 130. The cup holder 110 comprises a holder body 111 and a cup hold unit 112 for embracing a cup.

The driving means 120 includes a motor 121 and a gearbox 122. Rotational force developed by the motor 121 is amplified by the gearbox 122, and is applied through a rotary shaft 123. Accordingly, the cup holder 110, secured to the shaft 123, rotates when the motor 121 is operated.

The position control means 130 comprises a sensing wheel 131 and a pair of sensors 132 and 133 adjacent the circumference of the sensing wheel. The sensing wheel 131 is secured to the cup holder 110, and the pair of sensors 132 and 133 is secured to a base plate 101 by a bracket 134.

A plurality of sensing recesses 132a, 133a and 133b are formed at an outer circumference 135 of the sensing wheel 131. An original point and a stop position of the cup holder 110 are controlled in response to a reciprocal movement of sensing elements of the pair of sensors 132 and 133 as they move into and out of the sensing recesses 132a, 133a and 133b.

In other words, the original point of the cup holder 110 is controlled by the relative movement of the sensing element of the sensor 132 in the sensing recess 132a, and the stop position of the cup holder 110 is controlled by the relative movement of the sensing element of the sensor 133 in the sensing recess 133a and 133b. The sensing disc 131 may be formed integrally with the cup holder 110 rather than as an attached item.

When the cup holder 110 reaches the stop position, as sensed by the sensor 133 and the sensing recesses 133a and 133b, rotation of the cup holder 110 is halted by stopping the operation of the motor 121. However, sometimes the cup holder 110 cannot stop at the right place owing to inertia of the rotary body constituted by the cup holder and the drive mechanism or to a change of viscosity of grease inside the gearbox 122 caused e.g. by a change in the weather. If this happens, supplying of the cup and discharging of the product (e.g. ice cream) cannot be performed effectively. Accordingly, the vending machine may become soiled because the product is discharged to the wrong place and reputation of the machine as a reliable device can be damaged.

It is an object of the present invention to overcome the above-mentioned problems, at least in part.

According to a first aspect of the invention, a cup transfer device of a vending machine, comprises a cup holder; means for driving the cup holder; means for controlling the position of the cup holder; and means for adjusting the position of the cup holder. Typically, the driving means include a motor and gearbox. The position control means is secured to the cup holder and may comprise a sensing disc or wheel having a plurality of sensing features such as apertures, recesses, projections or other surface discontinuities formed on or near the periphery thereof, and a pair of sensors that co-operate with the sensing features.

In preferred embodiments of the invention, the position adjusting means may include position adjust features also formed on or adjacent the periphery of a sensing disc or wheel and a roller biased against an outer surface thereof by a flexible or resilient member. In other preferred embodiments the position adjusting means may include a position adjust hole or recess formed at the periphery or outer circumference of the sensing disc and a wedge member for selectively engaging with the position adjust hole or recess. Alternatively, the position adjusting means may include a magnetic element attached at the periphery or outer circumference of the sensing disc and an electromagnet for selectively co-operating with the magnetic element.

The invention also includes a vending machine having a cup transfer device as set out above.

According to another aspect of the invention, a vending machine has a cup transfer device for moving a cup between a product discharge station to a cup supply station, wherein the transfer device comprises a movable cup holder, drive means for moving the cup holder between the said stations, control means including a sensor for sensing the position of the cup holder, the control means being arranged to stop operation of the drive means in response to the sensor output, and position adjusting means for adjusting the position of the cup holder separately from operation of the drive means by the control means.

Additional preferred features of the invention are contained in the dependent claims hereinafter.

The invention will now be described by way of example with reference to the drawings, in which:-
Figure 1 is an exploded perspective view showing the main parts of the applicant's earlier cup transfer device for a vending machine;
Figure 2 is an exploded perspective view showing the main parts of a cup transfer device in accordance with the invention;
Figure 3 is a diagrammatic plan view of a position adjusting device of the cup transfer device of Figure 2; and
Figures 4A to 4C are diagrammatic plan views of alternative position adjusting devices.

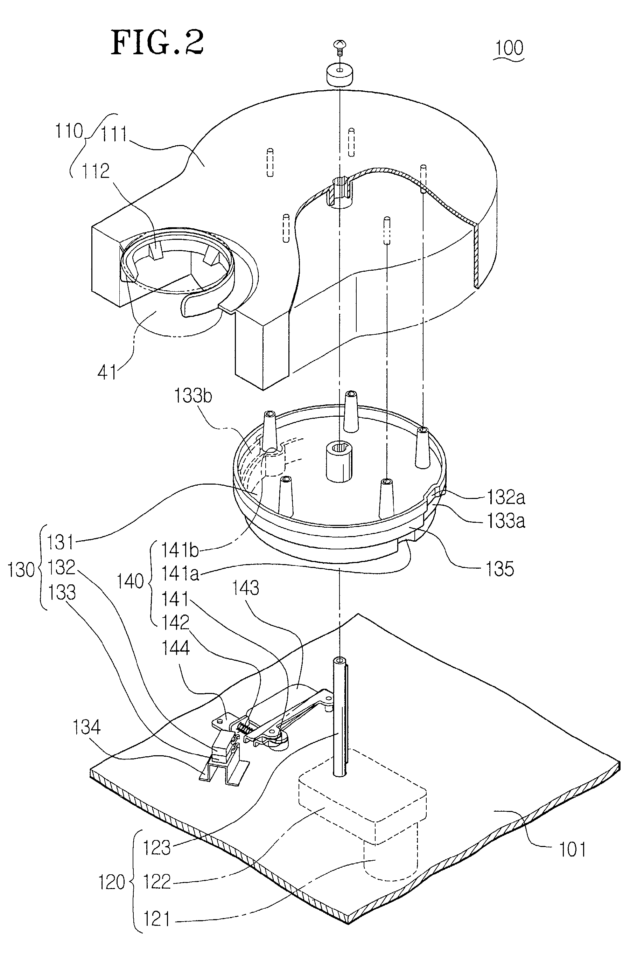

Referring to Figure 2, a cup transfer device 100 of a vending machine in accordance with the invention comprises a rotatable cup holder 110, driving means 120, position control means 130, and position adjusting means 140.

The cup holder 110 comprises a holder body 111 and an off-axis cup hold unit 112. The holder body 111 is generally cylindrically formed with an open lower side. The cup hold unit 112 is shaped to embrace a cup 41 and is located at an outer edge of the holder body 111.

The driving means includes a motor 121 and a gearbox 122. The rotational force of the motor 121 is amplified by the gearbox 122 and is applied through a shaft 123 connected to the cup holder body 111. Accordingly, the cup holder 110, secured to the rotary shaft 123, rotates when the motor is operated.

The position control means 130 comprises a sensing disc 131 and a pair of sensors 132 and 133. The sensing disc 131 is secured to the cup holder 110 so as to be rotatable therewith, and the pair of sensors 132 and 133 are secured to a base plate 101 by a bracket 134.

A plurality of sensing recesses 132a, 133a and 133b are formed in the outer circumference of the sensing disc 131. An origin point and a stop position of the cup holder 110 are controlled in response to relative movement between the pair of sensors 132 and 133 in the sensing recesses 132a, 133a and 133b. Specifically, the origin point of the cup holder 110 is controlled in response to movement of a sensing element in the sensor 132 when in registry with the sensing recess 132a, while the stop position of the cup holder 110 is controlled in response to movement of a sensing element of the sensor 133 when in registry with the sensing recesses 1332 and 133b.

The sensing disc 131 may be formed integrally with the cup holder 110.

The position adjusting means 140 comprise a roller 141, a resilient member 142 in the form of a coil spring resiliently biasing the roller 141 against the sensing disc 131, and position adjusting recesses 141a and 141b. The position adjusting recesses 141a and 141b are formed in the outer circumference of the sensing disc 135, and the roller 141 is rotatably supported by a roller holder 143.

The roller holder 143 is pivotably supported by the roller 141. One end of the spring 142 is supported by a bracket 144 secured to the base plate 101, and the other end bears against the roller holder 143 so as to bias the roller 141 in the direction of the sensing disc 131. Therefore, the roller 141 is pressed against a circumference (an outwardly facing annular surface) of the sensing disc 131, and the stop position of the sensing disc 131 is adjusted by relative movement of the roller 141 in the position adjusting recesses 141a and 141b. Accordingly, the stop position of the cup holder 110 is accurately defined.

With the above construction, even when the cup holder 110 stops at a position deviated from the required exact stop point, the position of the cup holder 110 is again adjusted to the exact stop point by the position adjust means 140 due to the rotational force exerted on the disc 131 by the roller 141 when the disc is to one side or other of the required stop point.

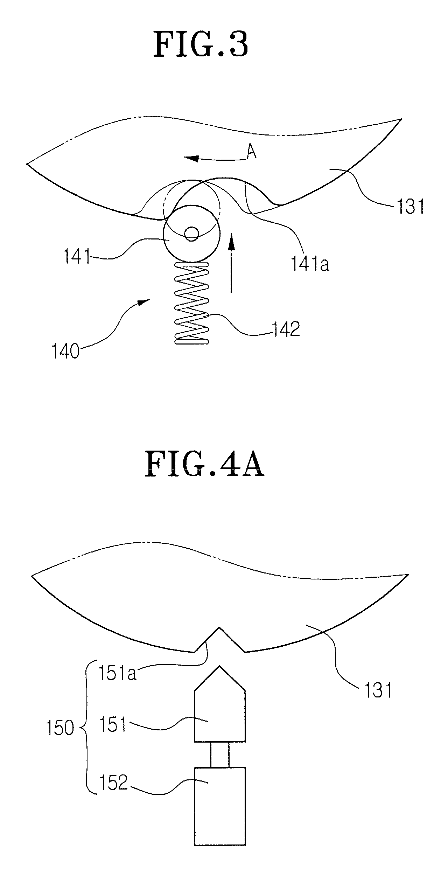

In other words, as shown in Figure 3, although the cup holder 110 may stop at a position deviated from the exact stop point, the position of the sensing disc 131 is adjusted, as shown by the ghost line in Figure 3, as the roller 141 is advanced by the biasing force of the spring acting against one side of the recess. That is, as the roller 141 is pressed to a side wall of the position adjusting recess 141a of the disc 131 by the spring 142, the sensing disc 131 is rotated in the direction of the arrow A of Figure 3, and thus the position of the cup holder 110 is rotationally adjusted.

The cup transfer devices 100 of alternative vending machines in accordance with the invention are described below.

As shown in Figure 4a, alternative adjusting means 150 may have a construction similar to that of the position adjusting means 140 described above with reference to Figure 3, except that the position adjusting means 150 comprises a wedge member 151 instead of a roller, and a bi-directional solenoid 152 instead of a spring.

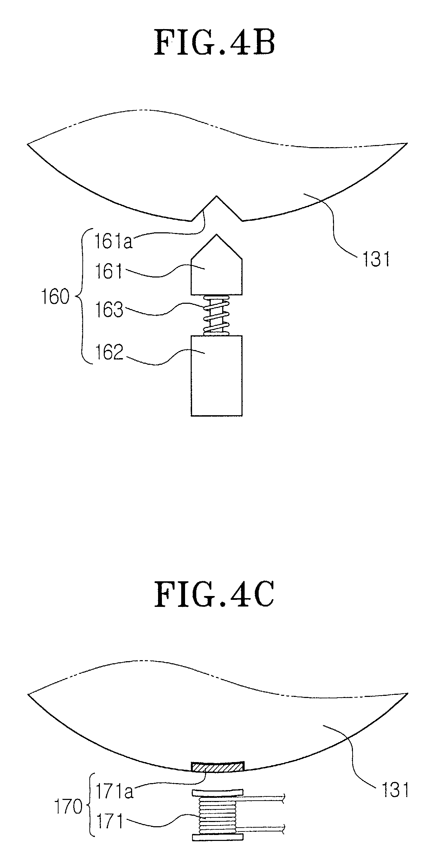

In addition, the position adjusting means 160 shown in Figure 4B also have a construction similar to that of the position adjusting means 140 of Figure 3 except that the position adjust means 160 comprises a wedge member 161 instead of the roller 141, a unidirectional solenoid 162, and a spring 163.

Moreover, the position adjusting means 170 shown in Figure 4C have a construction similar to that of the position adjusting means 140 of Figure 3 except that the position adjusting means 170 comprise a magnetic element 171a instead of the position adjusting recess, and an electromagnet 171 instead of the roller 141 and the spring 142.

The construction and the operation of the position adjusting means of these alternative preferred embodiments will be understood by those skilled in the art merely by referring to the drawings. Therefore a detailed description thereof is omitted here.

It will be noted, however, that the undesignated reference numerals 151 a of Figure 4A and 161a of Figure 4B are position adjusting recesses corresponding to the position adjusting holes 141a and 141b described above with reference to Figure 2. The detailed form of the position adjusting recesses 151a and 161a corresponds to the form of the wedge members 151 and 161, respectively.

It will be understood, then, that with the cup transfer devices 100 as described above, although drive to the cup holder 110 may cease when the holder is near but not at its exact stop point, the rotary position of the holder 110 is adjusted by the position adjusting means 140, and thus, the stop position of the cup holder 110 can be exactly controlled.

## Claims

1. A vending machine cup transfer device comprising:
a cup holder (110);
means (120) for driving the cup holder;
means (130) for controlling the position of the cup holder; and
means (140; 150; 160; 170) for adjusting the position of the cup holder.

2. A device according to claim 1, **characterised in that** the driving means include a motor (121) and a gearbox (122)

3. A device according to claim 1 or claim 2, **characterised in that** the position control means (130) include:
a sensing disc (131) secured to the cup holder and having a plurality of sensing features (132a, 133a, 133b) formed at an outer circumference of the disc; and
a pair of sensors (132, 133) responsive to the sensing features.

4. A device according to claim 3, **characterised in that** the sensing features comprise recesses or projections at the disc circumference, and the sensors each have a sensor body and a sensing element movable with respect to the sensor body when one of the said disc features engages the sensing element.

5. A device according to any preceding claim, **characterised in that** the position adjusting means includes:
a portion defining a position adjust feature (141a) at an outer circumference of a sensing disc; and
a roller (141) biased against a circumferential surface of the sensing disc by a resilient member (142).

6. A device according to any of claims 1 to 4, **characterised in that** the position adjusting means includes:
a portion defining a position adjust feature (151a, 151b) at an outer circumference of a sensing disc; and
a wedge member (151, 161) for selectively engaging with the position adjust feature.

7. A device according to any of claims 1 to 4, **characterised in that** the position adjusting means includes:
a magnetic element (171a) attached to an outer circumference of a sensing disc; and
an electromagnet (171) for selectively acting upon the magnetic element.

8. A vending machine including a cup transfer device according to any preceding claim.

9. A vending machine having a cup transfer device for moving a cup between a product discharge station to a cup supply station, wherein the transfer device comprises a movable cup holder (110), drive means (120) for moving the cup holder between the said stations, control means including a sensor (132, 133) for sensing the position of the cup holder, the control means being arranged to stop operation of the drive means in response to the sensor output, and position adjusting means (140, 150, 160, 170) for adjusting the position of the cup holder separately from operation of the drive means by the control means.

10. A vending machine according to claim 9, **characterised in that** the position adjusting means are operable to apply a moving force to the cup holder in addition to the moving force applied by the drive means.

11. A vending machine according to claim 8 and or claim 9, **characterised in that** the position adjusting means comprise a resilient detent mechanism (140; 150; 160).

12. A vending machine according to claim 8 or claim 9, **characterised in that** the position adjusting means comprise a device (170) operable to apply an electromagnetic moving force by means of a magnetic element (171a) fastened directly to the cup holder.
